# EUROPEAN PATENT APPLICATION

(11) **EP 4 725 810 A1**
(43) Date of publication of application: **15.04.2026**
(21) Application number: 25208317.5
(22) Date of filing: 13.10.2025
(51) Int. Cl.: B62D 35/00, B62D 35/02

(54) **ROAD VEHICLE WITH FRONT DOWNFORCE WING**

(30) Priority: 14.10.2024 IT 202400022818
(71) Applicant: FERRARI S.p.A., 41100 Modena (IT)
(72) Inventor: SEDDA, Salvatore, 41100 Modena (IT); BIANCALANA, Matteo, 41100 Modena (IT)
(74) Representative: Studio Torta S.p.A.

(57) **Abstract**

A road vehicle has a support frame (2) delimited, on the lower side, by an aerodynamic underbody (11); a passenger compartment (4); an outer bodywork (5); a front compartment (6) delimited by a front bumper (8) and a front bonnet (9); a first duct (17) having a first inlet (18) made through the aerodynamic underbody (11) and a first outlet (19) made through the front bonnet (9); and a second duct (20), which has a second inlet (21) made through the front bumper (8), flows into the first duct (17) so as to have a second outlet (22) made inside the first duct (17), and is delimited, on the lower side, by a front wing (23) configured to generate a downforce on the aerodynamic underbody (11) itself.

## Description

### CROSS-REFERENCE TO RELATED PATENT APPLICATIONS

This application claims priority from Italian Patent Application No. 102024000022818 filed on 14 October 2024, the content of which is incorporated herein by reference.

### TECHNICAL FIELD

The present invention relates to a road vehicle.

### BACKGROUND

In particular, the present invention relates to a road vehicle of the type comprising a support frame defining part of a lower floor of the rod vehicle; a passenger compartment mounted on the support frame and projecting upwards from the lower floor; an aerodynamic underbody fixed to the support frame and defining part of the lower floor; and a propulsion engine for moving the road vehicle.

The road vehicle further comprises a rear wing, which is mounted rearward of the passenger compartment, extends above a rear bonnet, and has an aerofoil profile configured to generate, on the road vehicle, a downward vertical load and increase the road vehicle grip on ground.

The known road vehicles of the type described above have some drawbacks mainly arising from the fact that the vertical load generated by the rear wing is insufficient to ensure the correct behaviour of the road vehicle under braking or driving-on-curves conditions.

### SUMMARY OF THE INVENTION

Object of the present invention is to provide a road vehicle, which is free from the drawbacks described above and which is simple and economical to manufacture.

According to the present invention there is provided a road vehicle as claimed in the appended claims.

### BRIEF DESCRIPTION OF THE DRAWINGS

The present invention will now be described with reference to the accompanying drawings, which illustrate a non-limiting embodiment thereof, in which:
- Figures 1 and 2 are two schematic perspective views, with parts removed for clarity's sake, of a preferred embodiment of the road vehicle of the present invention;
- Figures 3 and 4 are two schematic perspective views, with parts removed for clarity's sake, of a detail of the road vehicle of Figures 1 and 2; and
- Figure 5 is a schematic longitudinal section, with parts removed for clarity's sake, of the detail of Figures 3 and 4.

### DETAILED DESCRIPTION OF THE EMBODIMENTS

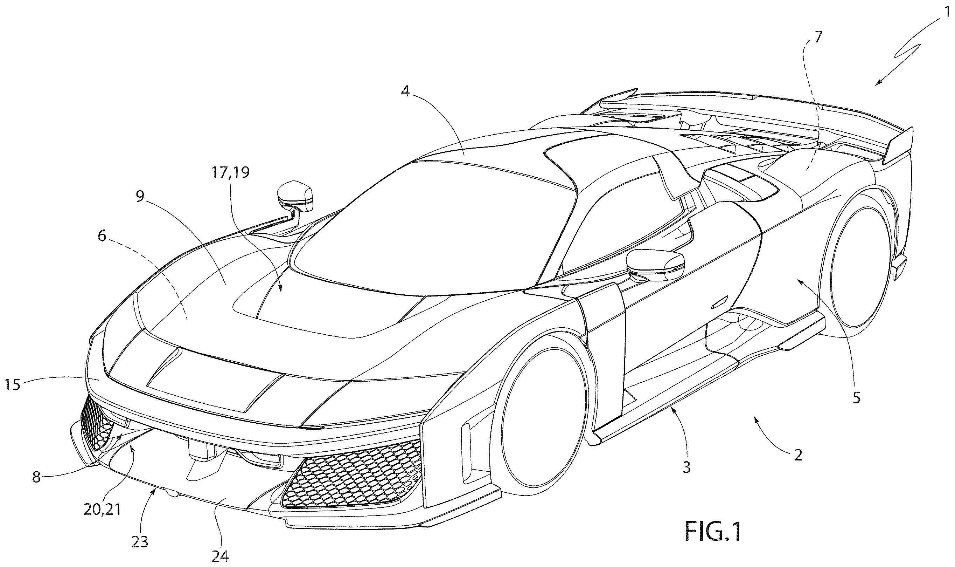

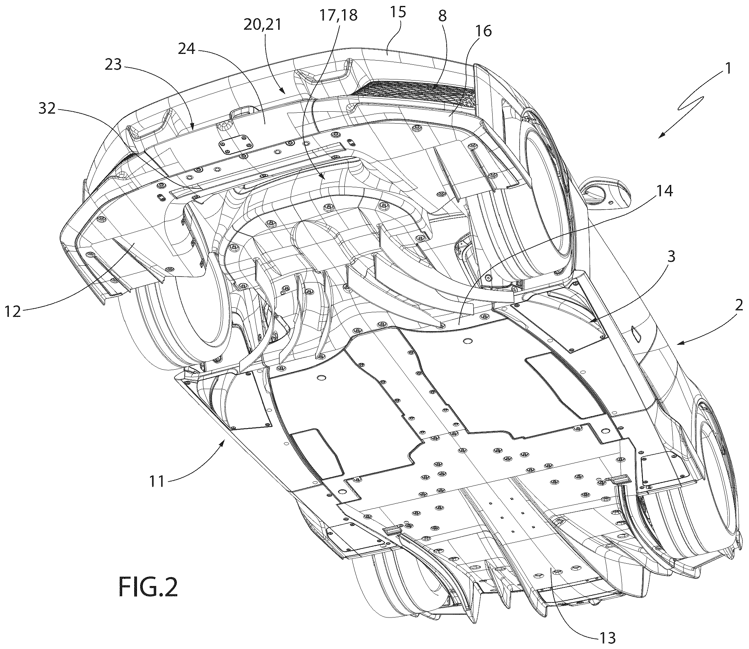

With reference to Figures 1 and 2, number 1 denotes, as a whole, a road vehicle comprising a support frame 2 defining at least part of a lower floor 3 of the road vehicle 1, a passenger compartment 4 mounted on the frame 2 and projecting upwards from the floor 3, and an outer bodywork 5.

The road vehicle 1 further comprises a front compartment 6 and a rear compartment 7 provided within the bodywork 5.

The front compartment 6 is delimited by a front bumper 8 and a front bonnet 9, and accommodates therein a known and not shown propulsion engine and a front radiator 10 for cooling the same propulsion engine (not shown).

The road vehicle 1 further comprises an aerodynamic underbody 11, which is fixed to the frame 2, defines part of the floor 3, and in turn comprises a front bottom 12 mounted at the front compartment 6, a rear bottom 13 mounted at the rear compartment 7, and a central bottom 14 mounted at the passenger compartment 4.

The bumper 8 comprises an upper shell 15 connected to the bonnet 9 and a lower shell 16 fixed on the front bottom 12.

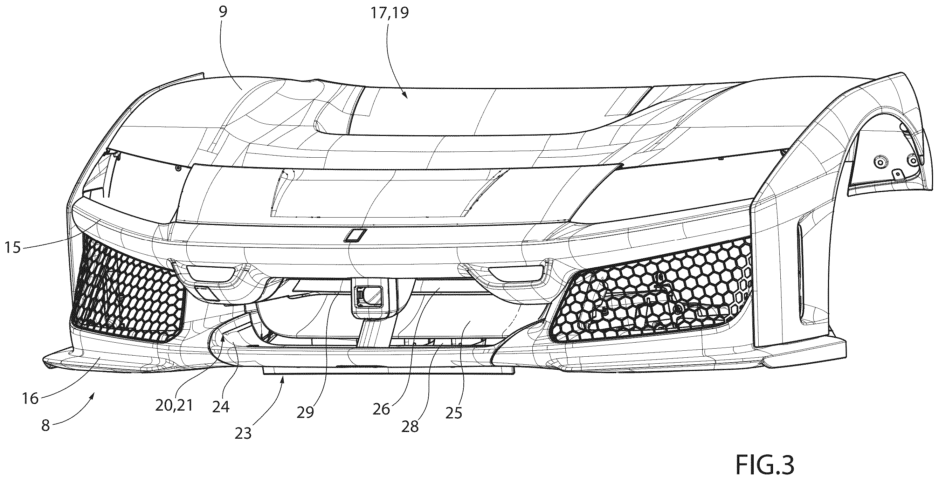

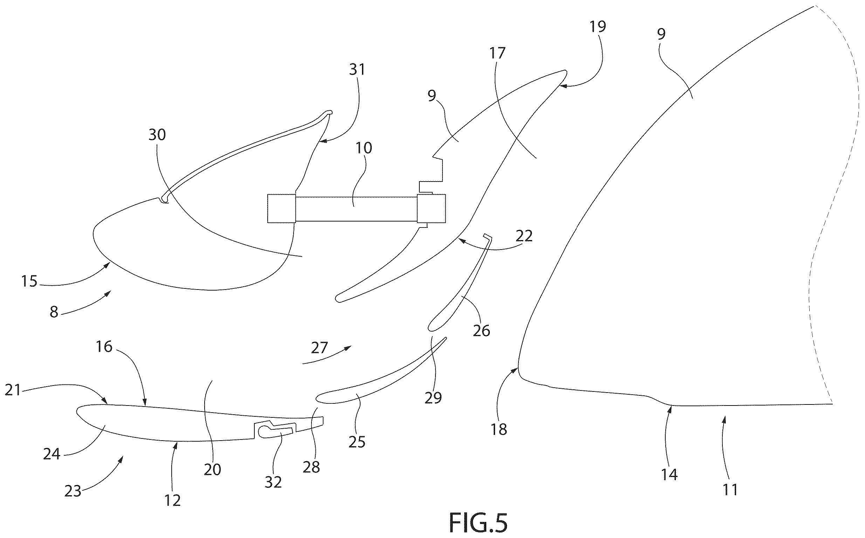

According to Figures 1 to 5, the road vehicle 1 further comprises a first duct 17, which is substantially S-shaped, and extends between an inlet 18 made between the front bottom 12 and the central bottom 14 and an outlet 19 made through the bonnet 9.

The duct 17 cooperates with a second duct 20, which has an inlet 21 made through the bumper 8 between the shells 15 and 16, protrudes inside the duct 17, and flows into the first duct 17 so as to have an outlet 22 made inside the duct 17 itself.

The duct 20 is delimited on the lower side by a front wing 23 configured to generate a downforce on the aerodynamic underbody 11.

The wing 23 comprises an inlet element 24, which is defined by the assembly of the front bottom 12 and the lower shell 16, and is arranged so as to delimit, together with the upper shell 15, the inlet 21 of duct 20 and, together with the central bottom 14, the inlet 18 of duct 17.

The wing 23 further comprises, in this specific case, an intermediate element 25 and an outlet element 26 mounted in succession and in order downstream of the element 24 in a flowing direction 27 of the airflow along the duct 20.

The wing 23 finally comprises a first slit 28 defined between the elements 24 and 25 and a second slit 29 defined between the elements 25 and 26.

With regard to the above, it should be specified that:
- the slit 28 has a decreasing cross-section in a flowing direction of the airflow through the same slit 28;
- the slit 29 has a decreasing cross-section in a flowing direction of the airflow through the same slit 29; and
- the duct 20 has a decreasing cross-section from the inlet 21 to the outlet 22.

During the travelling of the road vehicle 1, the airflow encountered by the road vehicle 1 is fed both along the upper surface and along the lower surface of the wing 23, which aerofoil profile allows the airflow to be deflected and advanced inside the duct 17.

The interaction between the aerofoil profile of wing 23 and the airflow fed along the wing 23 generates a relatively high pressure on the upper surface of the wing 23 and of the aerodynamic underbody 11, and a relatively low pressure on the lower surface of wing 23 and of the aerodynamic underbody 11 and, therefore, a downforce, that is to say a relatively high aerodynamic load, on the road vehicle 1.

The road vehicle 1 further comprises a third duct 30, which extends between the inlet 21 and an outlet 31 made between the bumper 8 and the bonnet 9, and accommodates the radiator 10 therein.

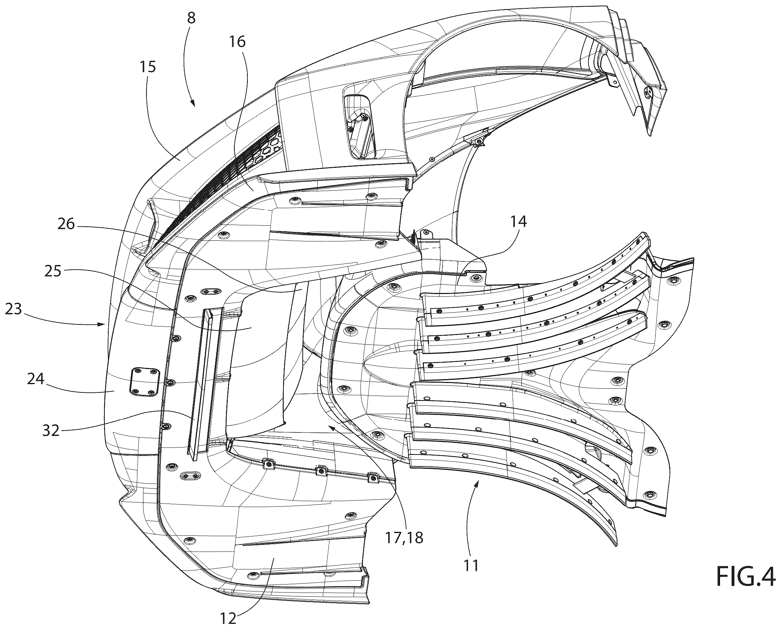

The wing 23 is provided with a deflector 32, which is movable with respect to the wing 23, between a rest position (figure 2), in which the deflector 32 is substantially contained within the aerofoil profile of the wing 23, and an operating position (figure 4), in which the deflector 32 projects from the wing 23 towards the road surface.

The downforce generated by the wing 23 when the deflector 32 is arranged in its rest position is greater than the downforce generated by the wing 23 when the deflector 32 is arranged in its operating position.

The road vehicle 1 has some advantages mainly arising from the fact that the wing 23 generates a relatively high downforce on the aerodynamic underbody 11.

## Claims

1. A road vehicle comprising a support frame (2) delimited, on the lower side, by an aerodynamic underbody (11); a passenger compartment (4); an outer bodywork (5); and a front compartment (6) provided in the outer bodywork (5) and delimited by a front bumper (8) and a front bonnet (9); and **characterised in that** it further comprises a first duct (17), which has a first inlet (18) made through the aerodynamic underbody (11) and a first outlet (19) made through the front bonnet (9), and a second duct (20), which has a second inlet (21) made through the front bumper (8), flows into the first duct (17) so as to have a second outlet (22) made inside the first duct (17), and is delimited, on the lower side, by a front wing (23) configured to generate a downforce on the aerodynamic underbody (11) itself.

2. The road vehicle according to claim 1, wherein the aerodynamic underbody (11) comprises a front bottom (12), a rear bottom (13), and a central bottom (14) provided between the front bottom (12) and the rear bottom (13); the first inlet (18) of the first duct (17) being made between the front bottom (12) and the central bottom (14).

3. The road vehicle according to claim 1 or 2, wherein the front wing (23) comprises an inlet segment (24) configured to delimit the first inlet (18) of the first duct (17) and the second inlet (21) of the second duct (20).

4. The road vehicle according to claim 3, wherein the front bumper (8) comprises a lower shell (16) defining, together with the front bottom (12), the inlet segment (24) of the front wing (23).

5. The road vehicle according to claim 4, wherein the front bumper (8) further comprises an upper shell (15) defining, together with the lower shell (16), the second inlet (21) of the second duct (20).

6. The road vehicle according to any one of the preceding claims and further comprising a third duct (30), which extends between the second inlet (21) and a third outlet (31) made between the front bumper (8) and the front bonnet (9), and accommodates therein a front radiator (10).

7. The road vehicle according to any one of the preceding claims, wherein the second duct (20) has a decreasing cross-section from the second inlet (21) to the second outlet (22).

8. The road vehicle according to any one of the preceding claims, wherein the front wing (23) comprises a first element (24) and a second element (25) mounted in succession to one another, and a first slit (28) defined between said first and second elements (24, 25).

9. The road vehicle according to claim 8, wherein the first slit (28) has a decreasing cross-section in a flowing direction of the airflow through the first slit (28).

10. The road vehicle according to claim 8 or 9, wherein the front wing (23) comprises a third element (26) mounted downstream of the second element (25), and a second slit (29) defined between said second and third elements (25, 26).

11. The road vehicle according to claim 10, wherein the second slit (29) has a decreasing cross-section in a flowing direction of the airflow through the second slit (29).

12. The road vehicle according to any one of the preceding claims, wherein the first duct (17) is substantially S-shaped.

13. The road vehicle according to any one of the preceding claims, wherein the front wing (23) is provided with a deflector (32) movable with respect to the front wing (23) between a rest position, in which the deflector (32) is substantially contained in an aerofoil profile of the front wing (23), and an operating position, in which the deflector (32) projects from the front wing (23).

14. The road vehicle according to claim 13, wherein the downforce generated by the front wing (23) when the deflector (32) is in its rest position is greater than the downforce generated by the front wing (23) when the deflector (32) is in its operating position.

15. The road vehicle according to claim 13 or 14, wherein, when in its operating position, the deflector (32) projects from the front wing (23) towards the road surface.
